# EUROPEAN PATENT APPLICATION

(11) **EP 4 656 359 A1**
(43) Date of publication of application: **03.12.2025**
(21) Application number: 24863843.9
(22) Date of filing: 31.12.2024
(51) Int. Cl.: B29C 69/00, B29C 48/09, B29C 57/10, B29C 33/04, B29C 33/30, B29C 33/00

(54) **MULTI-LAYER CONTINUOUS FORMING PROCESS FOR PLASTIC BOTTLES**

(30) Priority: 06.03.2024 CN 202410252207
(71) Applicant: Shinva Medical Instrument Co., Ltd., Zibo, Shandong 255086 (CN)
(72) Inventor: DING, Xiaofeng, Shandong 255086 (CN); ZHOU, Lijun, Shandong 255086 (CN); ZHU, Qingguo, Shandong 255086 (CN); LI, Zhiwei, Shandong 255086 (CN); ZHAO, Liansen, Shandong 255086 (CN); WANG, Haihui, Shandong 255086 (CN); WANG, Yanqiang, Shandong 255086 (CN)
(74) Representative: CAPRI
(86) International application number: PCT/CN2024/144082
(87) International publication number: WO 2025/185323

(57) **Abstract**

Disclosed is a continuous multilayer molding process for plastic bottles, including the following steps: (1) discharging of a parison; (2) initial sealing of the parison; (3) molding and filling of a bottle body; (4) sealing of a first bottle body; (5) sealing of the parison; (6) forming of a product chain; (7) positioning before mold closing; repeating the step (3) when a main mold fixture clamps and moves the product chain downward to a position corresponding to a mold closing position, opening the main mold fixture and moving up to a position corresponding to a previous product chain, and closing the main mold fixture; and repeating the steps (4) to (7) to form a cycle to realize continuous production of the plastic bottles. According to the present application, the production efficiency and productivity are improved.

## Description

The present application claims the priority to Chinese Patent Application No. 2024102522071, titled "CONTINUOUS MULTILAYER MOLDING PROCESS FOR PLASTIC BOTTLES", filed with the China National Intellectual Property Administration on March 6, 2024, which is incorporated herein by reference in its entirety.

### FIELD

The present application relates to the technical field of plastic processing, and in particular to a continuous multilayer molding process for plastic bottles.

### BACKGROUND

Currently, plastic bottles are formed by a single-layer molding technology, which requires a head mold fixture and a main mold fixture to continuously hold a parison during the molding process of the plastic bottles. For example, a Chinese patent application publication (No. CN111483153B) discloses a continuous production process for plastic bottles, which falls within the technical field of plastic bottle production using BFS (Blow-Fill-Seal) equipment. The process includes the following steps: (1) discharging of a parison; (2) initial sealing of the parison; (3) molding and filling of a bottle body: after the hot-melt parison reaches a mold closing position, a mold is closed, where the mold includes a head mold and a main mold that are opened and closed separately, the main mold is closed to form a bottle body, while the head mold remains in an opened state for filling of a medicinal liquid through a filling tube, and a fixture is opened and moves upward; (4) sealing of a bottle neck; (5) sealing of the parison; (6) forming of a product chain; and repeating of the steps (3) to (6) in a cycle to achieve the continuous production process for the plastic bottles. With this application, the continuous production process for the plastic bottles is realized. The filling tube is arranged in the parison, so that the forming and filling of the plastic bottle are performed integrally. The filling process is always carried out in a sealed state, and the parison stays sealed throughout the molding process of the plastic bottles, ensuring good sterility and avoiding the risk of contamination.

Through the aforementioned process, only one row of plastic bottles can be formed at a time, resulting in low efficiency. When forming a row of bottles, a waste area clamped by a pair of head mold fixtures inevitably forms on the product chain. Moreover, since the head mold fixtures tension the parison downward across the mold, a wall thickness of the head mold fixtures should be at least 12 mm to meet production requirements. This leads to low material utilization. Additionally, in the event of equipment malfunction, the head mold fixtures may easily collide with the mold when crossing over the mold, thus damaging the expensive mold and undermining equipment stability.

### SUMMARY

In order to solve the problems in the conventional technology, an object of the present application is to provide a continuous multilayer molding process for plastic bottles, which improves the production efficiency and productivity.

A continuous multilayer molding process for plastic bottles according to the present application includes the following steps:
Step (1): Discharging of a parison. A hot-melt parison is extruded by an extrusion device. A filling tube is inserted in the extrusion device and extends into the hot-melt parison.
Step (2): Initial sealing of the parison. A main mold fixture is closed to seal the hot-melt parison and pulls the hot-melt parison to move downward.
Step (3): Molding and filling of a bottle body. After the hot-melt parison reaches a main mold closing position, a second main mold of a mold is closed to form a second bottle body. A medicinal liquid is filled through the filling tube in an opened state of a first main mold and a head mold of the mold. After the filling of the second bottle body, the first main mold is closed to seal the second bottle body and form a first bottle body. The medicinal liquid is filled through the filling tube in the opened state of the head mold of the mold. The head mold, the first main mold and the second main mold of the mold are opened and closed independently.
Step (4): Sealing of the first bottle body. After the filling, the head mold is closed to seal a bottle neck of the first bottle body.
Step (5): Sealing of the parison. A head mold fixture is closed to clamp a formed product chain.
Step (6): Forming of the product chain. The mold, the main mold fixture, and the head mold fixture move downward together to a mold opening position. The mold is opened, and then the head mold fixture is opened, moves upward together with the mold to return to the mold closing position. The main mold fixture continuously clamps and moves the product chain downward and tensions the parison to prevent the parison from shaking left and right due to a demolding force.
Step (7): Positioning before mold closing. When the main mold fixture clamps and moves the product chain downward to the mold closing position, the step (3) is repeated, and the main mold fixture is opened, moves upward to a position corresponding to the previous product chain, and is closed.

The steps (4) to (7) are repeated to form a cycle to realize continuous production of the plastic bottles.

A second bottle body mold cavity is provided in the second main mold, and a first bottle body mold cavity and a second bottle neck mold cavity are provided in the first main mold and are arranged from top to bottom in the listed sequence. The second bottle neck mold cavity corresponds to the second bottle body mold cavity, and a first bottle neck mold cavity is provided in the head mold in correspondence to the first bottle body mold cavity. The first main mold and the second main mold are both provided with temperature probes, which are respectively communicated with the first bottle body mold cavity and the second bottle body mold cavity.

The head mold fixture is embedded in the head mold, and the main mold fixture is embedded in the second main mold.

The mold continuously pulls the hot-melt parison to move downward during the molding and filling of the bottle body and the sealing of the bottle neck.

A collection tube and a monitoring device are further provided. The collection tube is arranged in the extrusion device and passes through the extrusion device. A bottom end of the collection tube is communicated with the parison, and a top end of the collection tube is communicated with the monitoring device.

The main mold fixture is closed and the head mold fixture is in the opened state during the sealing of the hot-melt parison.

The main mold fixture is provided with a cooling profiling mold cavity. The cooling profiling mold cavity in the main mold fixture performs secondary cooling on the hot-formed plastic bottles, ensuring that the product chain is thoroughly cooled and is prevented from deforming due to stretching under its own weight.

The first driving device is provided corresponding to the head mold fixture, and a second driving device is provided corresponding to the main mold fixture. The first driving device and the second driving device are independent of each other. The independent driving devices for the head mold fixture and the main mold fixture better adapt to their respective movements. Additionally, the positions of the head mold fixture and the main mold fixture can be adjusted based on different bottle specifications, facilitating the production of bottles of different specifications.

A compressed gas channel and a water cooling channel are provided in the main mold fixture. The compressed gas channel is communicated with the cooling profiling mold cavity, and the water cooling channel is arranged corresponding to the compressed gas channel. The compressed gas channel is used to blow cold air onto an area of the plastic bottle that cannot be completely enclosed by the cooling profiling mold cavity for cooling. With the water cooling channel, the clean air entering the compressed gas channel in the main mold fixture is cooled, thereby achieving the output of the cold air while cooling the main mold fixture.

The head mold fixture has a thickness of 0.5 mm to 3 mm. In the conventional technology, since the head mold fixture tensions the parison downward across the mold, a wall thickness of the head mold fixture should be at least 12 mm to meet production requirements, resulting in low material utilization. In the present application, the head mold fixture moves up and down synchronously with the head mold and needs not to cross over the mold. Therefore, the thickness may be less than 3 mm, thereby improving the material utilization.

Compared with the conventional technology, the present application has the following beneficial effects.
1. In the present application, the second bottle body is formed through the second main mold, and then the first bottle body is formed at the same time when the second bottle body is sealed by the first main mold, thereby improving production efficiency and capacity.
2. The head mold fixture is arranged above the head mold and cooperates with the head mold. The main mold fixture is arranged below the second main mold and cooperates with the second main mold. The head mold fixture and the head mold move up and down synchronously without crossing over the mold, thus avoiding collisions with the mold and improving the operation stability of the equipment.
3. The main mold fixture is provided with the cooling profiling mold cavity. The cooling profiling mold cavity in the main mold fixture performs secondary cooling on the hot-formed plastic bottle, ensuring that the product chain is thoroughly cooled and is prevented from deformation due to stretching under its own weight. Additionally, the product chain is clamped in a profiling manner, which helps to maintain the clamping force on the product chain, preventing the product chain from being stretched and deformed caused by the demolding force of the mold.
4. The first driving device is arranged corresponding to the head mold fixture, and the second driving device is arranged corresponding to the main mold fixture. The first driving device and the second driving device are independent of each other. The independent driving devices for the head mold fixture and the main mold fixture better adapt to their respective movements. Additionally, the positions of the head mold fixture and the main mold fixture can be adjusted based on different bottle specifications, facilitating the production of bottles of different specifications.
5. The head mold fixture has a thickness of 0.5 mm to 3 mm. In the conventional technology, since the head mold fixture tensions the parison downward across the mold, the wall thickness of the head mold fixture should be at least 12 mm to meet production requirements, resulting in low material utilization. In the present application, the head mold fixture moves up and down synchronously with the head mold, and needs not to cross over the mold. Therefore, the thickness may be less than 3 mm, thereby improving the material utilization.
6. The compressed gas channel and the water cooling channel are provided in the main mold fixture. The compressed gas channel is communicated with the cooling profiling mold cavity, and the water cooling channel is arranged corresponding to the compressed gas channel. The compressed gas channel is used to blow cold air onto the area of the plastic bottle that cannot be completely enclosed by the cooling profiling mold cavity for cooling. With the water cooling channel, the clean air entering the compressed gas channel in the main mold fixture is cooled, thereby achieving the output of cold air while cooling the main mold fixture.

### BRIEF DESCRIPTION OF THE DRAWINGS

FIG. 1 is a schematic view of a first stage of a process according to the present application, showing a state in which a parison is discharged, where sterile clean air is introduced into the parison through a gas inlet channel;
FIG. 2 is a left view of FIG. 1;
FIG. 3 is a schematic view of a second stage of the process according to the present application, showing a state in which a main mold fixture is closed in an initial stage of the process, where the main mold fixture pulls the parison to move downward;
FIG. 4 is a schematic view of a third stage of the process according to the present application, showing a state in which a mold, a head mold fixture, the main mold fixture and the parison all reach a mold closing position, where a second main mold is closed, a first main mold and a head mold are in an opened state, filling is performed through a filling tube, and the main mold fixture clamps and pulls the parison to move downward;
FIG. 5 is a schematic view of a fourth stage of the process according to the present application, showing a state in which the first main mold is closed, where the first main mold is closed, the head mold is in the opened state, filling is performed through the filling tube, and the main mold fixture clamps and pulls the parison to move downward;
FIG. 6 is a schematic view of a fifth stage of the process according to the present application, showing a state in which the head mold is closed, where the head mold is closed, and the main mold fixture clamps and pulls the parison to move downward;
FIG. 7 is a schematic view of a sixth stage of the process according to the present application, showing a state in which the head mold fixture is closed, where the head mold fixture is closed, and the main mold fixture clamps and pulls the parison to move downward;
FIG. 8 is a schematic view of a seventh stage of the process according to the present application, showing a state in which the mold reaches a mold opening position;
FIG. 9 is a schematic view of an eighth stage of the process according to the present application, showing a state in which the mold, the head mold fixture and the parison all reach the mold closing position, where the head mold fixture is opened and moves up to the mold closing position along with the mold, and the main mold fixture clamps and pulls the parison to move downward;
FIG. 10 is a schematic view of a ninth stage of the process according to the present application, showing a state in which the second main mold is closed, where the second main mold is closed, and the main mold fixture is opened and moves upward;
FIG. 11 is a schematic view of a tenth stage of the process according to the present application, showing a state in which the main mold fixture is closed, where the first main mold and the head mold are in the opened state, filling is performed through the filling tube, and the main mold fixture clamps and pulls the parison to move downward;
FIG. 12 is a schematic view of the head mold fixture and the main mold fixture being embedded in the head mold and the second main mold respectively; and
FIG. 13 is a schematic view of a water cooling channel in the main mold fixture.

Reference numerals:

| | | | |
|---|---|---|---|
| 1 | extrusion device, | 2 | filling tube, |
| 3 | fixture, | 4 | mold, |
| 5 | collection tube, | 6 | cooling device, |
| 7 | monitoring device, | 8 | product chain, |
| 101 | parison, | 201 | gas inlet channel, |
| 202 | liquid inlet channel, | 301 | head mold fixture, |
| 302 | main mold fixture, | 303 | second positioning and molding device, |
| 304 | compressed gas channel, | 305 | water cooling channel, |
| 401 | head mold, | 402 | first main mold, |
| 403 | first positioning and molding device, | | |
| 404 | second main mold, | 405 | mold closing position, |

| | | | |
|---|---|---|---|
| 406 | mold opening position, | 407 | temperature probe, |
| 801 | first bottle body, | 802 | second bottle body. |

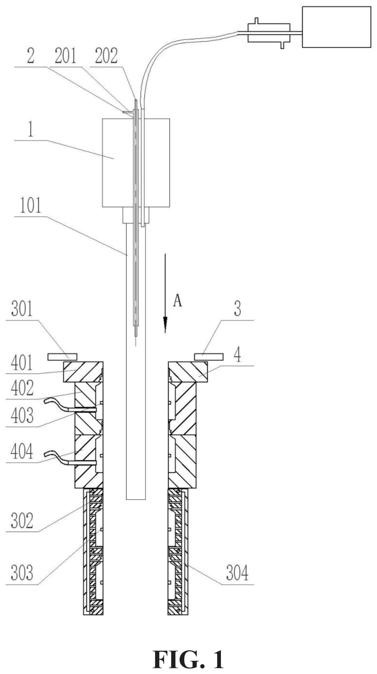

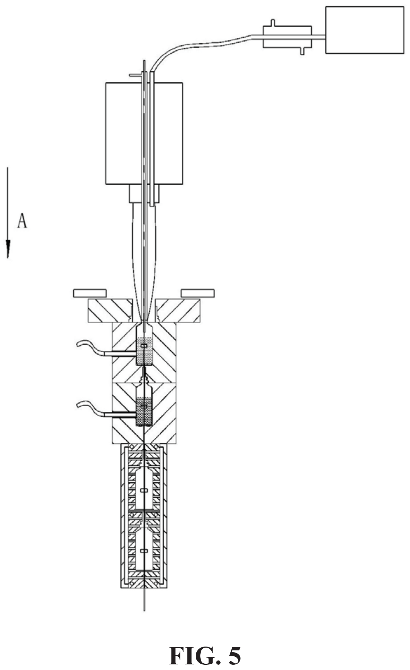

In FIG. 1 and FIGS. 3 to 12, an arrow A indicates a moving direction of the parison.

### DETAILED DESCRIPTION OF THE EMBODIMENTS

The present application is described in detail hereinafter in conjunction with embodiments.

### First Embodiment

As shown in FIGS. 1 to 11, a continuous multilayer molding process for plastic bottles according to the present application includes the following steps.

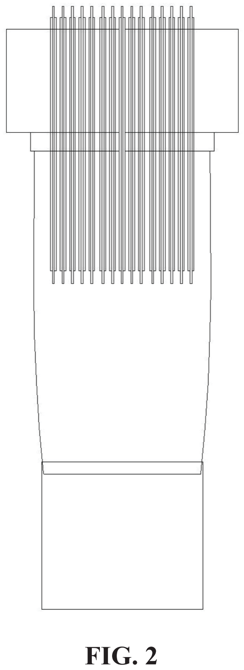

Step (1) is discharging of a parison 101. A hot-melt parison 101 is extruded by an extrusion device 1, and a filling tube 2 is inserted in the extrusion device 1 and extends into the hot-melt parison 101. Multiple filling tubes 2 may be arranged side by side, as shown in FIGS. 1 and 2.

A liquid inlet channel 202 and a gas inlet channel 201 are provided in the filling tube 2. The liquid inlet channel 202 is used for filling a liquid into a plastic bottle after a bottle body of the plastic bottle is formed. The gas inlet channel is used for continuously introducing clean air into the hot-melt parison 101, so that the hot-melt parison 101 is in an inflated state. This prevents wrinkling on a surface of the formed plastic bottle due to collapse of the hot-melt parison 101.

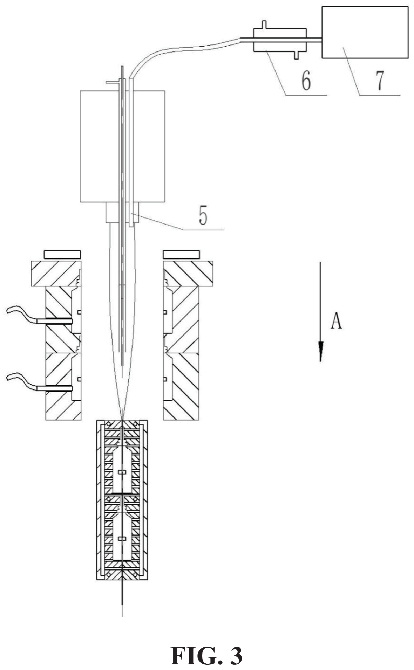

Step (2) is initial sealing of the parison 101. The main mold fixture 302 is closed to seal the hot-melt parison 101, and pulls the hot-melt parison 101 to move downward. A fixture 3 includes a main mold fixture 302 and a head mold fixture 301. During the initial sealing of the parison 101, only the main mold fixture 302 is closed to seal the hot-melt parison 101, and the head mold fixture 301 remains inactive, as shown in FIG. 3.

Step (3) is molding and filling of a bottle body. After the hot-melt parison 101 reaches a main mold closing position, a mold 4 is closed. The mold 4 includes a head mold 401, a first main mold 402 and a second main mold 404 which are opened and closed independently. The head mold 401, the first main mold 402 and the second main mold 404 may be mounted on a common track and move up and down synchronously. Vertical distances between the head mold 401, the first main mold 402 and the second main mold 404 remain constant, ensuring that a complete plastic bottle can be formed after the mold is closed. The head mold 401, the first main mold 402 and the second main mold 404 move independently in a lateral direction, that is, the opening and closing of the head mold 401, the first main mold 402 and the second main mold 404 are independent of each other without interference.

A second bottle body mold cavity is provided in the second main mold 404, and a first bottle body mold cavity and a second bottle neck mold cavity are provided in the first main mold 402 and are arranged from top to bottom in the listed sequence. The second bottle neck mold cavity corresponds to the second bottle body mold cavity, and a first bottle neck mold cavity is provided in the head mold 401 corresponding to the first bottle body mold cavity. The first main mold 402 and the second main mold 404 are both provided with temperature probes 407, which are respectively communicated with the first bottle body mold cavity and the second bottle body mold cavity. The temperature probes 407 are used for online monitoring of a wall temperature of the plastic bottle before filling, so as to achieve online control of the wall temperature of the plastic bottle before filling a medicinal liquid, thereby avoiding deterioration of a heat-sensitive medicinal liquid.

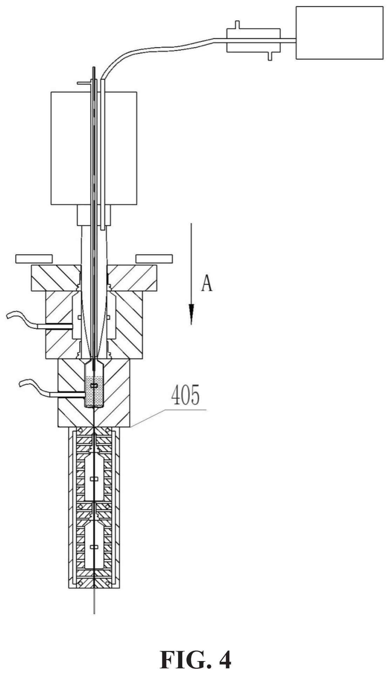

The second main mold 404 is closed, so that a second bottle body 802 is formed. The first main mold 402 and the head mold 401 are in an opened state, and the medicinal liquid is filled through the filling tube 2. After the second bottle body 802 is filled, the first main mold 402 is closed to seal the second bottle body 802, and at the same time, a first bottle body 801 is formed. The head mold 401 is in the opened state, and the medicinal liquid is filled through the filling tube 2, as shown in FIGS. 4, 5, 10 and 11.

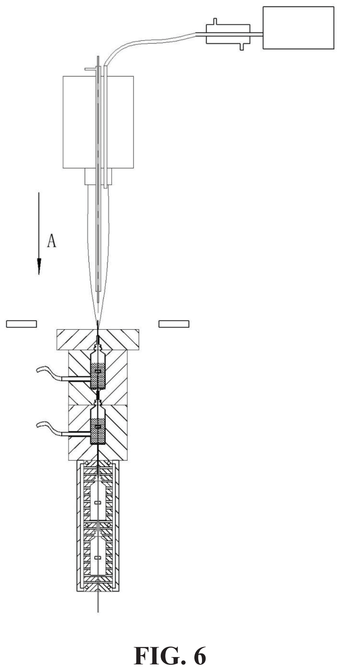

Step (4) is sealing of the first bottle body 801. After the filling is completed, the head mold 401 is closed to seal a bottle neck of the first bottle body 801, as shown in FIG. 6.

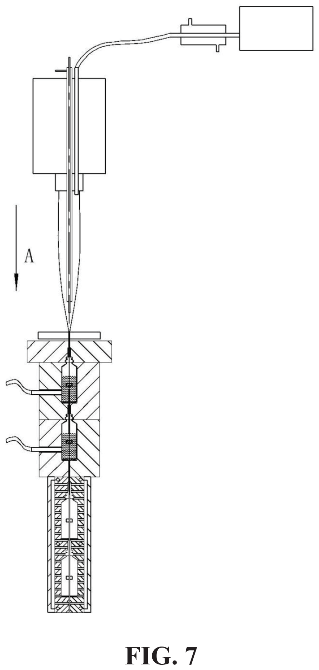

Step (5) is sealing of the parison 101. The head mold fixture 301 is closed and clamps a formed product chain 8, as shown in FIG. 7.

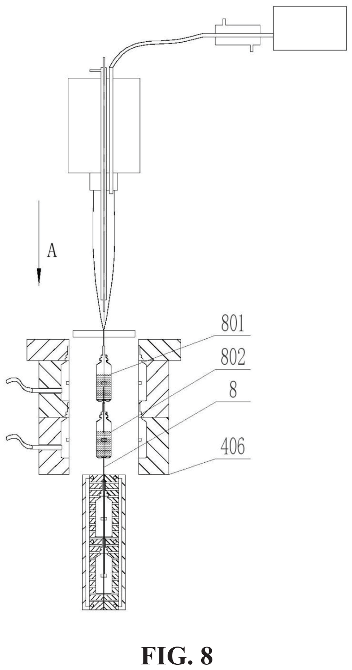

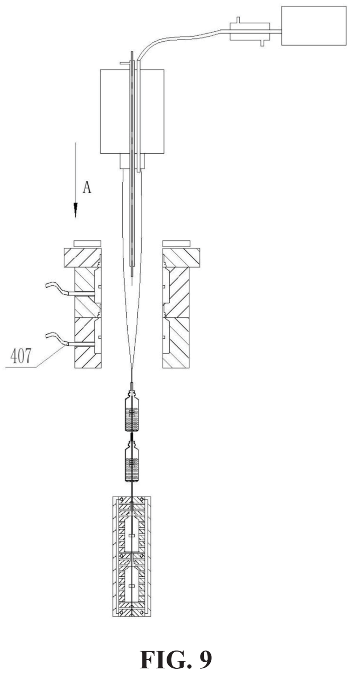

Step (6) is forming of the product chain 8. The mold 4, the main mold fixture 302 and the head mold fixture 301 move downward together to reach a mold opening position 406, and the mold 4 is opened. Then the head mold fixture 301 is opened, moves upward synchronously with the mold 4 and returns to the mold closing position 405. The main mold fixture 302 continues to clamp the product chain 8 to move downward, and tensions the parison to prevent it from shaking left and right due to a demolding force, as shown in FIGS. 8 and 9.

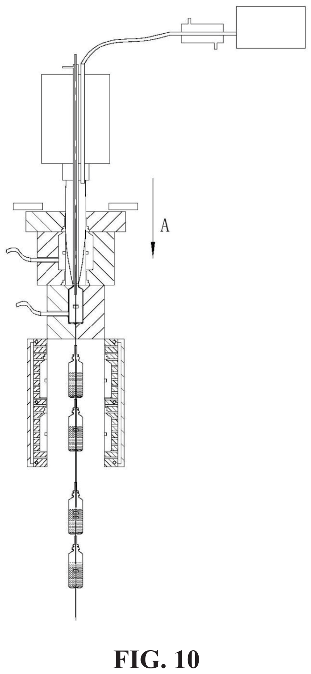

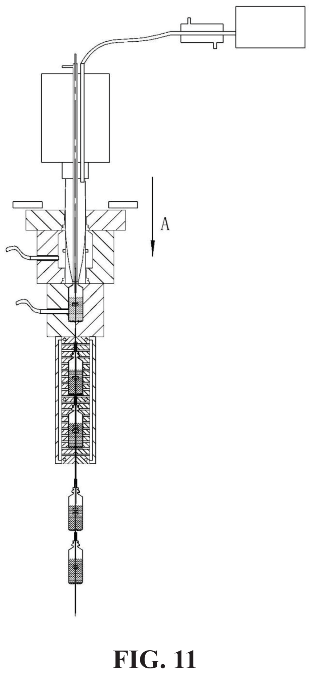

Step (7) is positioning before mold closing. When the main mold fixture 302 clamps the product chain 8 and moves downward to the mold closing position 405, the step (3) is repeated, and at the same time, the main mold fixture 302 is opened, moves upward to a position corresponding to the previous product chain 8, and is closed, as shown in FIGS. 10 and 11.

The steps (4) to (7) are repeated to form a cycle to realize continuous production of the plastic bottles.

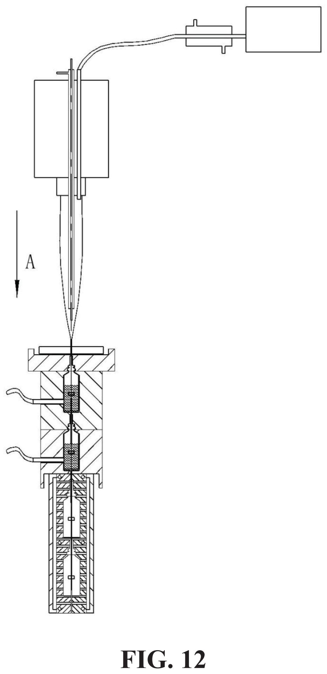

The head mold fixture 301 may be embedded in the head mold 401, and the main mold fixture 302 may be embedded in the second main mold 404. The plastic bottles are of different specifications, requiring a single piece of equipment capable of producing bottles of different specifications based on user demands. Consequently, different molds need to be designed for the bottles of different specifications, making it impossible to standardize mold production. The mold has a constant height; however, a height of the mold cavity varies with a height of the bottle, resulting in empty spaces in the head mold and the second main mold. If the head mold fixture is arranged above the head mold and the main mold fixture is arranged below the second main mold, the parison corresponding to the empty space in the head mold becomes waste after the head mold fixture is closed, leading to resource wastage. The resource wastage can be avoided by embedding the head mold fixture 301 into the head mold 401 and the main mold fixture 302 into the second main mold 404, as shown in FIG. 12.

The parison 101 is of an elongated circular shape or elliptical shape. Multiple filling tubes 2 are arranged in parallel in the parison 101.

During the molding and filling of the bottle body and the sealing of the bottle neck, the mold 4 continuously pulls the hot-melt parison 101 to move downward.

A collection tube 5 and a monitoring device 7 are further provided, as shown in FIG. 3. The collection tube 5 is arranged in the extrusion device 1 and runs through the extrusion device 1. A bottom end of the collection tube 5 is communicated with the parison 101, and a top end of the collection tube 5 is communicated with the monitoring device 7. The collection tube 5 collects the sterile air inside the parison 101 in real-time and transmits the sterile air to the monitoring device 7, enabling online control of the sterile environment in the parison 101. Additionally, a cooling device 6 is provided on the collection tube 5 close to the monitoring device 7 to control the temperature of the collected sterile air, preventing the sterile air from being excessively hot and damaging the monitoring device 7 or causing inaccuracy of monitored data.

The head mold fixture 301 is arranged above the head mold 401 and cooperates with the head mold 401. The main mold fixture 302 is arranged below the second main mold 404 and cooperates with the second main mold 404.

When sealing the hot-melt parison 101, the main mold fixture 302 is closed, and the head mold fixture 301 is in the opened state.

The main mold fixture 302 is provided with a cooling profiling mold cavity. The cooling profiling mold cavity in the main mold fixture 302 performs secondary cooling on the hot-formed plastic bottles, ensuring that the product chain 8 is thoroughly cooled and is prevented from deforming due to stretching under its own weight. There are at least two rows or more rows of cooling profiling mold cavities on the main mold fixture 302, so as to cool the bottles multiple times, thereby meeting the requirements for ultra-low temperature filling.

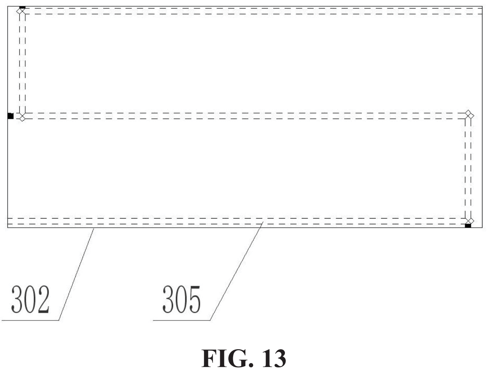

A compressed gas channel 304 and a water cooling channel 305 are provided in the main mold fixture 302. The compressed gas channel 304 is communicated with the cooling profiling mold cavity, and the water cooling channel 305 is arranged corresponding to the compressed gas channel 304, as shown in FIG. 13.

A first driving device is arranged corresponding to the head mold fixture 301, and a second driving device is arranged corresponding to the main mold fixture 302. The first driving device and the second driving device are independent of each other. The independent driving devices for the head mold fixture 301 and the main mold fixture 302 better adapt to their respective movements. Additionally, the positions of the head mold fixture 301 and the main mold fixture 302 can be adjusted based on different bottle specifications, facilitating the production of bottles of different specifications.

Each of the first main mold 402 and the second main mold 404 is provided with a first positioning and molding device 403, and the main mold fixture 302 is provided with a second positioning and molding device 303 corresponding to the first positioning and molding device 403. This ensures that when the main mold fixture 302 is closed, a position of the main mold fixture 302 matches the positions of the two formed plastic bottles.

The head mold fixture 301 has a thickness of 0.5 mm, 2 mm or 3 mm.

In the description of the present application, the orientation or positional relationships of the structure indicated by the terms such as "front", "rear", "left", "right", "upper" and "lower" are only for convenience of the description and do not constitute a limitation to the present application.

## Claims

1. A continuous multilayer molding process for plastic bottles, comprising the following steps:
step (1): discharging of a parison (101), which comprises extruding a hot-melt parison (101) by an extrusion device (1), wherein a filling tube (2) is inserted in the extrusion device (1) and extends into the hot-melt parison (101);
step (2): initial sealing of the parison (101), which comprises closing a main mold fixture (302) to seal the hot-melt parison (101), and pulling, by the main mold fixture (302), the hot-melt parison (101) to move downward;
step (3): molding and filling of a bottle body, which comprises: after the hot-melt parison (101) reaches a main mold closing position, closing a second main mold (404) of a mold (4) to form a second bottle body (802); filling a medicinal liquid through the filling tube (2) in an opened state of a first main mold (402) and a head mold (401) of the mold (4); closing, after the filling of the second bottle body (802), the first main mold (402) to seal the second bottle body (802) and form a first bottle body (801); and filling the medicinal liquid through the filling tube (2) in the opened state of the head mold (401), wherein the head mold (401), the first main mold (402) and the second main mold (404) of the mold (4) are opened and closed independently;
step (4): sealing of the first bottle body (801), which comprises closing, after the filling, the head mold (401) to seal a bottle neck of the first bottle body (801);
step (5): sealing of the parison (101), which comprises closing a head mold fixture (301) to clamp a formed product chain (8);
step (6): forming of the product chain (8), which comprises moving the mold (4), the main mold fixture (302), and the head mold fixture (301) downward together to a mold opening position (406), opening the mold (4), then opening the head mold fixture (301), moving the head mold fixture (301) upward together with the mold (4) to return to the mold closing position (405), continuously clamping and moving, by the main mold fixture (302), the product chain (8) downward, and tensioning, by the main mold fixture (302), the parison to prevent the parison from shaking left and right due to a demolding force;
step (7): positioning before mold closing, which comprises repeating the step (3) when the main mold fixture (302) clamps and moves the product chain (8) downward to the mold closing position (405), opening and moving the main mold fixture (302) upward to a position corresponding to the previous product chain (8), and closing the main mold fixture (302); and
repeating the steps (4) to (7) to form a cycle to achieve continuous production of the plastic bottles.

2. The continuous multilayer molding process for the plastic bottles according to claim 1, wherein
a second bottle body mold cavity is provided in the second main mold (404);
a first bottle body mold cavity and a second bottle neck mold cavity are provided in the first main mold (402) and are arranged from top to bottom in the listed sequence, and the second bottle neck mold cavity corresponds to the second bottle body mold cavity;
a first bottle neck mold cavity is provided in the head mold (401) corresponding to the first bottle body mold cavity; and
the first main mold (402) and the second main mold (404) are both provided with temperature probes (407), which are respectively communicated with the first bottle body mold cavity and the second bottle body mold cavity.

3. The continuous multilayer molding process for the plastic bottles according to claim 2, wherein the head mold fixture (301) is embedded in the head mold (401), and the main mold fixture (302) is embedded in the second main mold (404).

4. The continuous multilayer molding process for the plastic bottles according to claim 1, wherein in the step of molding and filling of the bottle body and the step of sealing the bottle neck, the mold (4) continuously pulls the hot-melt parison (101) to move downward.

5. The continuous multilayer molding process for the plastic bottles according to claim 2, wherein a collection tube (5) and a monitoring device (7) are further provided, the collection tube (5) is arranged in the extrusion device (1) and passes through the extrusion device (1), a bottom end of the collection tube (5) is communicated with the parison (101), and a top end of the collection tube (5) is communicated with the monitoring device (7).

6. The continuous multilayer molding process for the plastic bottles according to claim 2, wherein in the step of sealing the hot-melt parison (101), the main mold fixture (302) is closed and the head mold fixture (301) is in the opened state.

7. The continuous multilayer molding process for the plastic bottles according to claim 6, wherein a first driving device is provided corresponding to the head mold fixture (301), a second driving device is provided corresponding to the main mold fixture (302), and the first driving device and the second driving device are independent of each other.

8. The continuous multilayer molding process for the plastic bottles according to claim 1, wherein the main mold fixture (302) is provided with a cooling profiling mold cavity.

9. The continuous multilayer molding process for the plastic bottles according to claim 8, wherein a compressed gas channel (304) and a water cooling channel (305) are provided in the main mold fixture (302), the compressed gas channel (304) is communicated with the cooling profiling mold cavity, and the water cooling channel (305) is arranged corresponding to the compressed gas channel (304).

10. The continuous multilayer molding process for the plastic bottles according to claim 3, wherein the head mold fixture (301) has a thickness of 0.5 mm to 3 mm.
